# EUROPÄISCHE PATENTSCHRIFT

(11) **EP 3 668 734 B1**
(45) Veröffentlichungstag und Bekanntmachung des Hinweises auf die Patenterteilung: **19.05.2021**
(21) Anmeldenummer: 18785831.1
(22) Anmeldetag: 24.09.2018
(51) Int. Cl.: B60J 1/17, B61D 25/00, B60J 1/00

(54) **FENSTERVORRICHTUNG FÜR EIN SCHIENENFAHRZEUG**
WINDOW DEVICE FOR A RAIL VEHICLE
SYSTÈME DE FENÊTRE POUR UN VÉHICULE FERROVIAIRE

(30) Priorität: 25.09.2017 DE 102017216908
(43) Veröffentlichungstag der Anmeldung: 24.06.2020
(73) Patentinhaber: Siemens Mobility GmbH, 81739 München (DE)
(72) Erfinder: KAMMERLOHER, Herbert, 82239 Biburg (DE); HENGSTENBERG, Thomas, 82194 Gröbenzell (DE); WIMBERGER, Thomas, 85356 Freising (DE)
(86) Internationale Anmeldenummer: PCT/EP2018/075808
(87) Internationale Veröffentlichungsnummer: WO 2019/057971

(56) Entgegenhaltungen:
- WO-A1-2007/133170
- DE-A1-102012 212 001
- JP-U- S51 109 509

## Beschreibung

Die Erfindung betrifft eine Fenstervorrichtung für ein Schienenfahrzeug mit mindestens einer geöffneten Position, einer geschlossenen Position und einer Transportposition einer in einem beweglichen Schieberahmen angeordneten Fensterscheibe, wobei der bewegliche Schieberahmen in einem Fensterführungsrahmen angeordnet ist.

In Schienenfahrzeugen kommen meist sogenannte Schachtfenster zum Einsatz. Diese sind in einer geöffneten Position in einem durch die Wandverkleidung des Schienenfahrzeugs bereitgestellten Schacht versenkbar. Schachtfenster bestehen üblicherweise aus einem bewegliche Schieberahmen, der eine Fensterscheibe aufnimmt und beweglich in einem Fensterführungsrahmen angeordnet ist. Bei derzeitigen Schachtfenstern besteht der bewegliche Schieberahmen beispielsweise aus mehreren zu einem umlaufenden Rahmen verschweißten Strangpressprofilen, in welchen die Glasscheibe eingeklebt wird. Die Glasscheibe kann, bei einem Versagen der Verklebung, aus dem Schieberahmen herausfallen oder herauskippen und somit die Sicherheit beeinträchtigen. Hersteller von derzeitigen Schachtfenstern müssen daher entsprechend hochwertige Qualifikationen für das Schweißen der Strangpressprofile zu einem Rahmen sowie für das Einkleben der Fensterscheibe vorweisen können, da das Gewicht der Scheibe hauptsächlich auf den zu einem Schieberahmen verschweißten Strangpressprofilen und der Klebeverbindung zwischen dem Schieberahmen und der Fensterscheibe lastet und diese Komponenten somit sicherheitsrelevant sind.

Zusätzlich müssen der Schieberahmen und ein gegebenenfalls vorhandenes Gegengewicht bzw. Kontergewicht des Schieberahmens bei einem möglichen Transport oder einem Ausbau des Schachfensters arretiert werden können, um Personen- oder Sachschäden durch bewegliche Komponenten zu verhindern. Bei einer Ausführung des Schachtfensters mit einem Gegengewicht bzw. Kontergewicht ist die alleinige, bestimmungsgemäße Verriegelung des Fensters im Schieberahmen, wie sie auch im Betriebseinsatz vorgenommen wird, hierfür nicht ausreichend. Es werden bei Neuauslieferung von Schachtfenstern u.a. Holz-Einleger mitgeliefert, diese müssen jedoch für einen eventuellen erneuten Transport über lange Zeit aufgehoben oder mühsam erneut angeschafft werden Beispiele für ähnliche Fenstervorrichtungen aus dem Stand der Technik sind in JP S51 109509 U, WO 2007/133170 A1 oder DE 10 2012 212001 A1 gezeigt.

Aufgabe der Erfindung ist es eine Fenstervorrichtung vorzuschlagen, bei der die Gefahr eines Herausfallens oder Herauskippens der Fensterscheibe aus dem Schieberahmen beim Auftreten eines Versagens der Klebeverbindung minimiert wird. Gelöst wird die Aufgabe durch den Gegenstand des unabhängigen Patentanspruchs 1. Vorteilhafte Ausgestaltungen der Erfindung sind Gegenstand von jeweils abhängigen Unteransprüchen.

Nach einem Aspekt der Erfindung wird eine Fenstervorrichtung für ein Schienenfahrzeug mit mindestens einer geöffneten Position, einer geschlossenen Position und einer Transportposition einer in einem beweglichen Schieberahmen angeordneten Fensterscheibe bereitgestellt. Der bewegliche Schieberahmen ist in einem Fensterführungsrahmen angeordnet. Erfindungsgemäß weist die Fensterscheibe eine größere Fläche auf als die dazugehörige Fensteröffnung des Fensterführungsrahmens.

Der Schieberahmen wird in dem Fensterführungsrahmen geführt und von dem Fensterführungsrahmen über Führungselemente gehalten, wobei der Schieberahmen und die Fensterscheibe beim Öffnen und Schließen der Fenstervorrichtung im Fensterführungsrahmen in einer vertikalen Richtung aufwärts und abwärts verschoben werden können. Der Schieberahmen eines Schachtfensters ist im Bereich zur Aufnahme der Fensterscheibe als ein L- förmiges, umlaufend gekantetes Blech ausgeführt. Der Schieberahmen bildet dadurch eine einseitige Vertiefung zum Aufnehmen der Fensterscheibe. Somit wird die Fensterscheibe in einem ersten Randbereich der Fensterscheibe und einer Kante der Fensterscheibe von dem L-förmig umlaufend gekanteten Bereich des Schieberahmens aufgenommen, während ein zweiter Randbereich der Fensterscheibe von dem L-förmigen Bereich des Schieberahmens nicht verdeckt wird. Die Fensterscheibe ist dabei größer als die zugehörige Fensteröffnung ausgeführt, so dass in mindestens einem Randbereich der Fensteröffnung eine Überlappung mit der Fensterscheibe entsteht.

Der Randbereich der Fensteröffnung kann dabei sowohl durch eine Fahrzeugverkleidung als auch durch den Fensterführungsrahmen ausgebildet sein. Die Sicherung der Fensterscheibe in ihrem ersten Randbereich durch den L-förmigen Profilrahmen des Schieberahmens und die Überlappung der Fensterscheibe mit dem Randbereich der Fensteröffnung im zweiten Randbereich der Fensterscheibe sichern die Fensterscheibe gegen ein mögliches Herausfallen oder Kippen der Fensterscheibe bei einem möglichen Versagen der Klebeverbindung zwischen Schieberahmen und Fensterscheibe.

Durch die beidseitige, doppelte Sicherung der Fensterscheibe in ihrem Randbereich kann die Fensterscheibe bei Versagen des Klebers weder nach innen noch nach außen fallen, sondern verbleibt in der vorgesehen Position.

Da die Last der Fensterscheibe nicht auf der Klebeverbindung liegt, ist diese vorliegend nicht sicherheitsrelevant. An die Klebeverbindung kann somit eine deutlich geringere Anforderung gestellt werden. Sie dient vielmehr hauptsächlich der korrekten Positionierung der Fensterscheibe im Schieberahmen. Die Herstellung kann hierdurch mit einem geringeren Aufwand durchgeführt und weniger kostenintensiv gestaltet werden.

Nach einer weiteren Ausführungsform ist der Schieberahmen mit einem Laser zugeschnitten. Vorzugsweise ist der Schieberahmen aus einem Blech gefertigt oder weist zumindest bereichsweise in einer einseitigen Vertiefung zum Aufnehmen der Fensterscheibe ein Strangpressprofil auf. Ein Blech kann entsprechend der notwendigen Maße mit einem Laser passend zugeschnitten werden. Dabei können zusätzlich weitere Ausschnitte oder notwendige Aussparungen in das Blech mit einem Laserbearbeitungswerkzeug oder durch Bohren oder Fräsen in das Strangpressprofil eingebracht werden. Alle notwendigen Teile oder Funktion oder deren Anbindungspunkt können dabei beispielsweise mit dem Laser in das Blech bzw. durch Bohren oder Fräsen in das Strangpressprofil integriert werden.

Vorzugsweise kann das Blech nach dem Bearbeiten durch ein Laserbearbeitungswerkzeug in eine Form gestanzt bzw. umgeformt/gebogen werden. Hierdurch kann beispielsweise eine Vertiefung zum Herstellen eines L-förmigen umlaufenden Bereichs zum Aufnehmen der Fensterscheibe eingebracht werden.

Bei einer Verwendung von Laserbearbeitungswerkzeugen können kleinere Fertigungstoleranzen als bei Schweißverfahren realisiert werden. Des Weiteren kann die Anzahl an notwendigen Komponenten reduziert werden, da beispielsweise Haken zum Aufnehmen von Kontergewichten und Transportsicherungen bereits bei der Herstellung des Schieberahmens aus einem Blech in den Schieberahmen eingebracht werden können. Alternativ zu einer Verwendung von Kontergewichten kann das Blech für die Verwendung eines Federmechanismus zum Erzeugen einer der Gewichtskraft des Schieberahmens mit einer eingesetzten Fensterscheibe entgegengerichteten Kraft gestaltet werden.

Aus Blechen gestanzte bzw. umgebogene und zuvor durch Laserverfahren bearbeitete Schieberahmen können schneller und ökonomischer hergestellt werden als bisherige mehrteilige Schieberahmen.

Nach einer weiteren Ausführungsform ist der Schieberahmen aus einem umlaufenden gekanteten Blech gefertigt. Vorzugsweise wird hierzu ein zuvor mit einem Laser zugeschnittenes Metallblech zu einem umlaufenden Rahmen oder Schieberahmen verkantet, sodass der gesamte Rahmen aus nur einem umlaufenden Stück Blech geformt ist. Hierdurch kann das Zusammenschweißen oder Zusammenschrauben einer Vielzahl von Komponenten entfallen. Viele Schweißnähte in einem konventionellen Schieberahmen können aufgrund der durch die Fensterscheibe wirkenden Last eine negative Auswirkung auf die Stabilität des Schieberahmens haben. Deshalb bestehen spezielle Anforderungen an das Schweißen im Bereich des Schieberahmens, wobei das Fachwissen hierüber durch spezielle Fachkenntnisse aufwendig nachgewiesen werden muss. Durch die erfindungsgemäße Fenstervorrichtung kann das Schweißen vollständig und somit auch aufwendigen Fertigungsschritte für Schweiß-, Richt- und Nacharbeiten, wie beispielsweise Schleifen oder Spachteln, entfallen. Dies führt zu einem geringeren Fertigungsaufwand bei der Herstellung, einem Entfall der Anforderungen an das Schweißverfahren sowie einer Reduzierung der Teilevielfalt im Herstellungsprozess des Schieberahmens und somit einer deutlichen Kosteneinsparung.

Gemäß einer weiteren Ausführungsform umrandet der Schieberahmen eine größere Fläche als die zugehörige Fläche der Fensteröffnung des Fensterführungsrahmens. Hierdurch kann zusätzlich eine Überlappung des Randbereichs einer Fensteröffnung in einer Fahrzeugverkleidung oder dem Fensterführungsrahmen sichergestellt werden. Durch eine größere Dimensionierung des Schieberahmens im Verhältnis zur Fensteröffnung kann ein Herausfallen des Schieberahmens aus der Fensteröffnung in eine erste Richtung, beispielsweise zu einer Außenseite des Schienenfahrzeuges, verhindert werden. Durch die Führung des Schieberahmens in dem Fensterführungsrahmen kann zudem ein Kippen der Fensterscheibe in eine zweite Richtung, beispielsweise zu einer Innenseite des Schienenfahrzeuges, verhindert werden. Der Schieberahmen weist vorzugsweise Fensterführungselemente auf, in denen der Schieberahmen vorzugsweise vertikal zu einer Längsachse des Schienenfahrzeuges bewegbar gelagert ist. Die Fensterführungselemente halten dabei den Schieberahmen in seiner vorgesehen Position und stützen den Schieberahmen horizontal beidseitig ab.

Nach einem weiteren Ausführungsbeispiel liegt zwischen der Fensterscheibe und einem durch die Fensterscheibe überlappten Rand des Fensterführungsrahmens eine umlaufende Dichtung an. Durch die größere Dimensionierung der Fensterscheibe über die Größe der dazugehörigen Fensteröffnung hinaus, liegt die Dichtung nicht am Schieberahmen, sondern direkt am Fenster an. Durch die direkt an der Fensterscheibe anliegende Dichtung, kann die Fensterscheibe zusätzlich zur L- förmige Aussparung zum Aufnehmen der Fensterscheibe des Schieberahmens von der der Aussparung entgegengesetzten Seite gegen ein Herausfallen gesichert werden. Somit wird die Fensterscheibe auf der einen Seite durch die L-förmige Aussparung des Schieberahmens und auf der anderen Seite durch die Dichtung und den im Randbereich die Fensterscheibe überlappenden Fensterführungsrahmen gegen ein Herausfallen zu einer Innen- oder einen Außenseite des Schienenfahrzeugs gesichert. Zudem kann durch eine direkt an der Fensterscheibe anliegende Dichtung eine verbesserte thermische Isolierung gewährleistet werden. Gemäß einem weiteren Ausführungsbeispiel der Fenstervorrichtung sind alle Anbindungspunkte für Führungselemente und/oder Verriegelungselemente sowie für ein Gegengewicht und/oder einen Federmechanismus integral mit dem Schieberahmen ausgeführt. Hierdurch kann der Schieberahmen einteilig integral ausgeführt sein, wobei eine Anzahl der benötigten Komponenten reduziert werden kann. Des Weiteren kann hierdurch ein Montageaufwand verringert werden.

Erfindungsgemäß weist der Schieberahmen eine integrierte Transportsicherung auf. Insbesondere für die Neuauslieferung oder den Ein- und Ausbau sowie den Transport der Fenstervorrichtung mit einem bereits montierten Gegengewicht ist das Vorhandensein einer Transportsicherung notwendig, um eine Absicherung vor Personen- und Sachschäden zu ermöglichen, da bei nicht sachgemäßer Sicherung des Gegengewichts eine Quetschgefahr besteht. In die Fenstervorrichtung ist bereits bei der Herstellung des Schieberahmens eine Transportsicherung integriert. Hierzu wird direkt bei der Bearbeitung des Blechs zur Herstellung des Schieberahmens durch einen Laser eine Aussparung, in Form einer Schraubenaufnahme, eingebracht. Die Transportsicherung bietet die Möglichkeit das Gegengewicht schnell und einfach zu sichern. Dabei kann die Transportsicherung die Möglichkeit bieten, den Schieberahmen in einer bestimmten Position einzuhaken oder anderweitig mechanisch zu blockieren.

Erfindungsgemäß ist die integrierte Transportsicherung in einer Transportposition mit dem Fensterführungsrahmen verbindbar. Dabei kann die Transportsicherung unterschiedlich gestaltet sein, wie beispielsweise in Form eines Hakens, einer Öse oder eines Schiebers. Vorzugsweise weist der Fensterführungsrahmen eine Aussparung oder eine Öse auf, in die die Transportsicherung eingreifen, oder mit der die Transportsicherung verbunden werden kann. Befindet sich der Schieberahmen in der Transportposition, so kann die Transportsicherung des Schieberahmens mit dem Fensterführungsrahmen verbunden werden und ein Blockieren des Gegengewichts ermöglicht werden. Hierdurch kann die Sicherheit während des Ein- und Ausbaus und während des Transports deutlich erhöht und eine Transportsicherung einfach gestaltet werden.

Erfindungsgemäß ist die integrierte Transportsicherung in einer Transportposition mit dem Fensterführungsrahmen verschraubbar. Die Transportsicherung ist dabei vorzugsweise als ein flächig geformter Haken aus dem Blech des Schieberahmens ausgeführt. Dieser flächige Haken oder eine Runde Öffnung in einem flächigen Bereich kann beispielsweise an einem oberen Rand des Schieberahmens bzw. senkrecht zur Längsachse des Schienenfahrzeuges ausgerichtet sein und dazu geeignet sein mit einer entsprechenden Öffnung oder einem in den Fensterführungsrahmen oder einer Verkleidung des Fensterführungsrahmens eingebrachten Innengewinde formschlüssig oder kraftschlüssig, beispielsweise durch ein Verschrauben, verbunden zu werden. Das Verschrauben des Schieberahmens mit dem Fensterführungsrahmen oder der Fahrzeugverkleidung kann beispielsweise mit handelsüblichen Zylinderkopfschrauben erfolgen, wodurch die Montage der Transportsicherung vereinfacht werden kann. Die Transportsicherung kann dabei jederzeit lediglich beispielsweise mit mindestens einer Zylinderkopfschraube aktiviert werden. Die Transportsicherung bedarf keiner weiteren Komponenten und ist jederzeit einsatzbereit. Hierdurch kann der Schieberahmen durch einen Formschluss von beispielsweise einer Normschraube und dem Schieberahmen fixiert werden.

Die oben beschriebenen Eigenschaften, Merkmale und Vorteile dieser Erfindung sowie die Art und Weise, wie diese erreicht werden, werden klarer und deutlicher verständlich durch die Erläuterung der folgenden stark vereinfachten schematischen Darstellungen bevorzugter Ausführungsbeispiele. Hierbei zeigen
- FIG 1: eine perspektivische Darstellung einer Fenstervorrichtung für ein Schienenfahrzeug in einer Transportposition gemäß einem ersten Ausführungsbeispiel,
- FIG 2: eine perspektivische Darstellung eines beweglichen Schieberahmens mit einer darin angeordneten Fensterscheibe der Fenstervorrichtung gemäß dem ersten Ausführungsbeispiel,
- FIG 3: einen vergrößerten Ausschnitt A aus FIG 1 der Fenstervorrichtung gemäß dem ersten Ausführungsbeispiel,
- FIG 4: einen vergrößerten Ausschnitt B aus FIG 1 der Fenstervorrichtung gemäß dem ersten Ausführungsbeispiel und
- FIG 5: eine alternative Perspektive des vergrößerten Ausschnitts B aus FIG 1 der Fenstervorrichtung gemäß dem ersten Ausführungsbeispiel.

In den Figuren weisen dieselben konstruktiven Elemente jeweils dieselben Bezugsziffern auf.

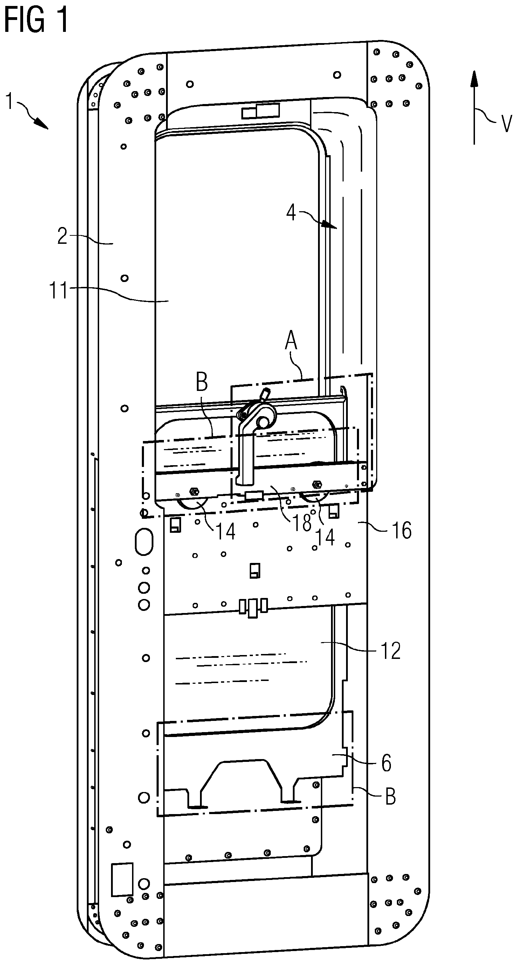

Die FIG 1 zeigt eine perspektivische Darstellung einer Fenstervorrichtung 1 für ein Schienenfahrzeug in einer Transportposition gemäß einem ersten Ausführungsbeispiel.

Die Fenstervorrichtung 1 weist einen Fensterführungsrahmen 2 auf, welcher in einer Tür eines nicht dargestellten Schienenfahrzeugs integriert ist. Die Fenstervorrichtung 1 kann alternativ auch in eine Seitenwand des Schienenfahrzeugs integriert bzw. montiert werden. Die Fenstervorrichtung 1 ist gemäß dem Ausführungsbeispiel ohne eine Verkleidung dargestellt, sodass ein Aufbau der jeweiligen Bestandteile der Fenstervorrichtung 1 sichtbar sind.

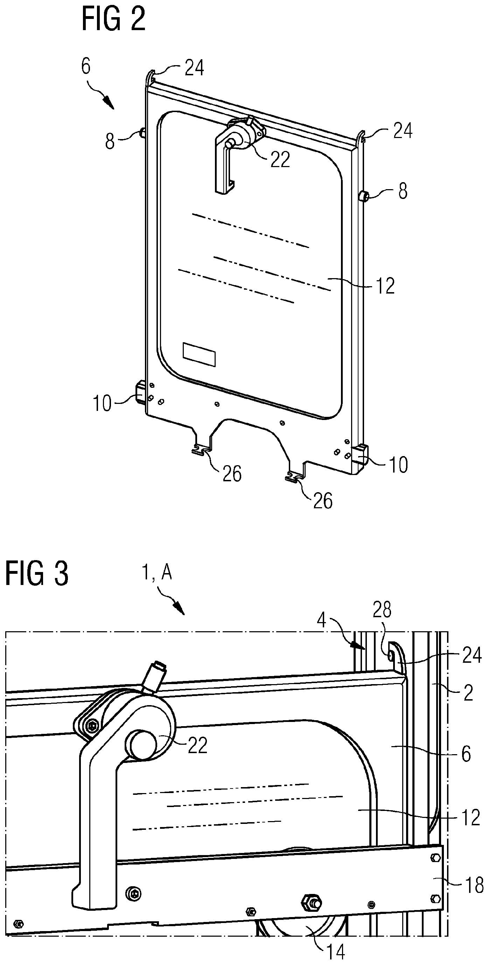

In dem Fensterführungsrahmen 2 sind Schienen 4 zum formschlüssigen Aufnehmen und Führen eines in einer vertikalen Richtung V beweglichen Schieberahmens 6. Der Schieberahmen 6 weist in der FIG 2 dargestellte Fensterführungselemente 8, 10 auf, welche in den Schienen 4 des Fensterführungsrahmens 2 geführt werden können.

Der Schieberahmen 6 ist parallel zu einer Fensteröffnung 11 des Fensterführungsrahmens 2 beweglich angeordnet. Insbesondere kann die Fensteröffnung 11 in einem geschlossenen Zustand des Schieberahmens 6 verschlossen und in einem offenen Zustand des Schieberahmens 6 freigegeben werden.

In dem beweglichen Schieberahmen 6 ist eine Fensterscheibe 12 angeordnet. Zum Reduzieren einer Kraft zum Bewegen des Schieberahmens 6 ist der Schieberahmen 6 über Umlenkrollen 14 mechanisch mit einem Kontergewicht 16 verbunden. Die Umlenkrollen 14 sind auf einer Querstrebe 18 drehbar positioniert. Die Querstrebe 18 ist beidseitig mit dem Fensterführungsrahmen 2 verbunden und dient als ein Begrenzungselement für das Kontergewicht 16. Das Kontergewicht 16 ist parallel zu dem beweglichen Schieberahmen 6 in dem Fensterführungsrahmen 2 angeordnet und kann auf parallel zu den Schienen 4 angeordneten Führungselementen vertikal geführt werden.

In der FIG 2 ist eine perspektivische Darstellung eines beweglichen Schieberahmens 6 mit einer darin angeordneten Fensterscheibe 12 der Fenstervorrichtung 1 gemäß dem ersten Ausführungsbeispiel gezeigt. Der Schieberahmen 6 ist aus einem umlaufend gekanteten Blech gefertigt und wurde mittels eines Lasers konfektioniert. Der Schieberahmen 6 weist eine einseitige Vertiefung zum Aufnehmen der Fensterscheibe 12 auf. Die Fensterscheibe 12 ist hierbei mit Hilfe einer Klebeverbindung 20 stoffschlüssig mit dem Schieberahmen 6 verbunden.

In dem Schieberahmen 6 ist ein Fensterverschluss 22 zum endseitig mechanischen Verbinden des Schieberahmens 6 mit dem Fensterführungs-rahmen 2 angeordnet. Neben dem Fensterverschluss 22 weist der Schieberahmen 6 vertikal oben angeordnete Transportsicherungen 24 auf. Es ist jeweils eine Transportsicherung 24 in einer Reihe mit den beidseitig positionierten Fensterführungselementen 8, 10 angeordnet. Erfindungsgemäß sind die Transportsicherungen 24 als integrale Bestandteile des Schieberahmens 6 in Form eines Hakens 24 ausgeführt. Die Transportsicherungen 24 können über konventionelle Schraubverbindungen mit dem Fensterführungsrahmen 2 mechanisch lösbar verschraubt werden und somit den Schieberahmen 6 zwecks Transportaufgaben der Fenstervorrichtung 1 arretieren.

Auf einer unteren Seite des Schieberahmens 6 sind zwei Haken 26 zum mechanischen Verbinden mit dem Kontergewicht 16 angeordnet. Die Haken 26 sind gemäß dem Ausführungsbeispiel integral mit dem Schieberahmen 6 ausgeführt. Es können Stahlseile einseitig mit den Haken 26 und einseitig mit dem Kontergewicht 16 verbunden werden. Die Stahlseile sind hierbei über die auf der Querstrebe 18 angeordneten Umlenkrollen 14 zum Bilden von Flaschenzügen geführt. Hierdurch kann der Schieberahmen 6 mit einer im Schieberahmen 6 angeordneten Fensterscheibe 12 mit weniger Kraftaufwand entlang der vertikalen Richtung V bewegt werden.

Die FIG 3 zeigt einen vergrößerten Ausschnitt A aus der FIG 1 der Fenstervorrichtung 1 gemäß dem ersten Ausführungsbeispiel. Insbesondere wird hier die Anordnung des Schieberahmens 6 mit dem Fensterführungsrahmen 2 bei einer Transportposition des Schieberahmens 6 veranschaulicht. Hierfür weist der Fensterführungsrahmen 2 im Bereich der Führungsschienen 4 Bohrungen mit Innengewinden auf. Die Transportsicherungen 24 können über Schraubverbindungen 28 mit dem Fensterführungsrahmen 2 verschraubt werden. Hierdurch kann der Schieberahmen 6 und der Fensterführungsrahmen 2 unbeweglich miteinander verschraubt werden und somit für einen Transport gesichert werden.

Insbesondere kann eine Transportposition des Schieberahmens 6 derart ausgeführt sein, dass die Fensterscheibe 12 zumindest teilweise von einer Verkleidung der Fensteranordnung 1 oder von einer Verstrebung der Fensteranordnung 1 geschützt verdeckt werden kann. Hierdurch kann eine Gefahr einer Beschädigung der Fensterscheibe 12 bei einem Transport reduziert werden. Durch Verwenden der verschraubbaren Transportsicherung 24, 28 sind spezielle Transportsicherungen nicht notwendig. Insbesondere kann eine Transportsicherung mit handelsüblichen Schrauben 28 realisiert werden.

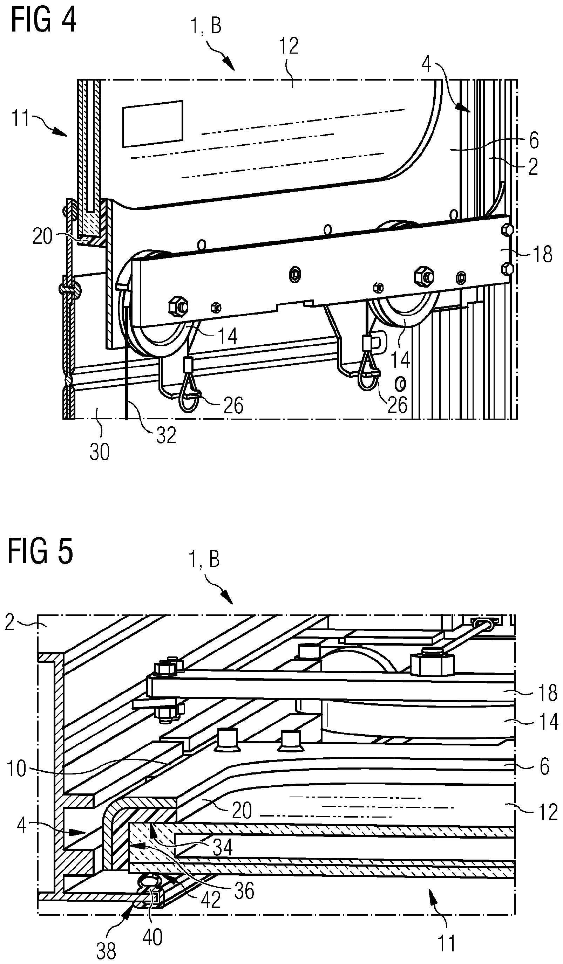

Die FIG 4 zeigt einen vergrößerten Ausschnitt B aus FIG 1 der Fenstervorrichtung 1 gemäß dem ersten Ausführungsbeispiel. Hier wird insbesondere die Verkleidung 30 des Fensterführungsrahmens 2 unterhalb der Fensteröffnung 11 veranschaulicht. Des Weiteren ist die einseitige Befestigung der Stahlseile 32 auf den Haken 26 des Schieberahmens 6 dargestellt.

Die FIG 5 zeigt eine alternative Perspektive des vergrößerten Ausschnitts B aus FIG 1 und FIG 4 der Fenstervorrichtung 1 gemäß dem ersten Ausführungsbeispiel. Es wird ein Querschnitt des im Fensterführungs-rahmen 2 eingesetzten Schieberahmens 6 dargestellt.

In die einseitige Vertiefung des Schieberahmens 6 ist die Fensterscheibe 12 mittels einer Klebeverbindung 20 eingebracht. Die Fensterscheibe 12 kann beispielsweise eine doppelte Fensterscheibe 12 mit einem eingeschlossenen Luftvolumen zum Verbessern der Wärmeisolation der Fensterscheibe 12 sein. Die Fensterscheibe 12 ist entlang einem ersten Randbereich 34 der Fensterscheibe 12 und entlang einer Kante 36 der Fensterscheibe 12 mit dem Schieberahmen 6 verklebt.

Die Fensterscheibe 12 weist gemäß dem Ausführungsbeispiel eine größere Fläche auf als die Fensteröffnung 11 des Fensterführungsrahmens 2. Hierdurch kann die Fensterscheibe 12 selbst bei einem Versagen der Klebeverbindung 20 nicht aus dem Fensterführungsrahmen 2 und somit aus dem Schienenfahrzeug fallen. Hierdurch können der Schieberahmen 6 und die Klebefläche 20 mit geringeren Anforderungen an Sicherheitsstandards ausgeführt sein, da der Fensterführungsrahmen 2 als eine zusätzliche Sicherung der Fensterscheibe 12 dient.

In einem Randbereich 38 der Fensteröffnung 11 weist der Fensterführungs-rahmen 2 eine umlaufende Dichtung 40 zum Abdichten der Fensterscheibe 12 auf. Neben einer thermischen Abdichtung dient die Dichtung 40 als ein mechanisch stabilisierendes Stützelement für die in dem Schieberahmen 6 angeordnete Fensterscheibe 12. Zum mechanischen Stützen und zum Dichten der Fensterscheibe 12 liegt die Dichtung 40 auf einem zweiten Randbereich 42 der Fensterscheibe 12 an. Des Weiteren kann die Dichtung 40 als ein Dämpfungselement gegen eventuelle Vibrationen des Schieberahmens 6 in einem Fahrbetrieb des Schienenfahrzeugs dienen.

## Patentansprüche

1. Fenstervorrichtung (1) für ein Schienenfahrzeug mit mindestens einer geöffneten Position, einer geschlossenen Position und einer Transportposition einer in einem beweglichen Schieberahmen (6) angeordneten Fensterscheibe (12),
- bei der der bewegliche Schieberahmen (6) in einem Fensterführungsrahmen (2) angeordnet ist,
- bei der die Fensterscheibe (12) eine größere Fläche aufweist als die dazugehörige Fensteröffnung (11) des Fensterführungsrahmens (2),
**dadurch gekennzeichnet,**
- **dass** der Schieberahmen (6) eine integrierte Transportsicherung (24) aufweist, wobei hierzu direkt bei der Bearbeitung des Blechs zur Herstellung des Schieberahmens durch einen Laser eine Aussparung in Form einer Schraubenaufnahme eingebracht wird,
- **dass** die integrierte Transportsicherung (24) in der Transportposition des Schieberahmens (6) mit dem Fensterführungsrahmen (2) verbindbar ist,
- **dass** die integrierte Transportsicherung (24) in der Transportposition mit dem Fensterführungsrahmen (2) verschraubbar ist.

2. Fenstervorrichtung nach Anspruch 1, bei der der Schieberahmen (6) mit einem Laser zugeschnitten ist.

3. Fenstervorrichtung nach Anspruch 1 oder 2, bei der der Schieberahmen (6) aus einem umlaufenden gekanteten Blech gefertigt ist.

4. Fenstervorrichtung nach einem der Ansprüche 1 bis 3, bei der der Schieberahmen (6) eine größere Fläche umrandet als die zugehörige Fläche der Fensteröffnung (11) des Fensterführungsrahmens (2).

5. Fenstervorrichtung nach einem der Ansprüche 1 bis 4, bei der zwischen der Fensterscheibe (12) und einem durch die Fensterscheibe (12) überlappten Rand (38) des Fensterführungsrahmens (2) eine umlaufende Dichtung (40) anliegt.

6. Fenstervorrichtung nach einem der Ansprüche 1 bis 5, bei der alle Anbindungspunkte für Führungs-(8, 10) und/oder Verriegelungselemente (22, 24), sowie für ein Gegengewicht (26) und/oder einen Federmechanismus integral mit dem Schieberahmen (6) ausgeführt sind.

## Claims

1. Window arrangement (1) for a rail vehicle, having at least one open position, a closed position and a transportation position for a window panel (12), which is arranged in a movable sliding frame (6),
- in the case of which the movable sliding frame (6) is arranged in a window-guiding frame (2),
- in the case of which the window panel (12) has a larger surface area than the associated window opening (11) of the window-guiding frame (2),
**characterized**
- **in that** the sliding frame (6) has an integrated transportation lock (24), wherein, for this purpose, an aperture in the form of a screw mount is introduced directly when the metal sheet for producing the sliding frame is being machined by laser cutting,
- **in that**, in the transportation position of the sliding frame (6), the integrated transportation lock (24) can be connected to the window-guiding frame (2),
- **in that**, in the transportation position, the integrated transportation lock (24) can be screwed to the window-guiding frame (2).

2. Window arrangement according to Claim 1, in the case of which the sliding frame (6) is cut to size using a laser.

3. Window arrangement according to Claim 1 or 2, in the case of which the sliding frame (6) is manufactured from all-round angled metal sheet.

4. Window arrangement according to one of Claims 1 to 3, in the case of which the sliding frame (6) borders a larger surface area than the associated surface area of the window opening (11) of the window-guiding frame (2).

5. Window arrangement according to one of Claims 1 to 4, in the case of which an all-round seal (40) is in abutment between the window panel (12) and a periphery (38) which belongs to the window-guiding frame (2) and is overlapped by the window panel (12) .

6. Window arrangement according to one of Claims 1 to 5, in the case of which all the points of attachment for guiding elements (8, 10) and/or locking elements (22, 24), and for a counterweight (26) and/or a spring mechanism, are formed integrally with the sliding frame (6).

## Revendications

1. Dispositif de fenêtre (1) pour un véhicule ferroviaire comprenant au moins une position ouverte, une position fermée et une position de transport d'une vitre de fenêtre (12) disposée dans un cadre coulissant (6) mobile,
- dans lequel le cadre coulissant (6) mobile est disposé dans un bâti de guidage de fenêtre (2),
- dans lequel la vitre de fenêtre (12) a une surface plus grande que l'ouverture de fenêtre (11) correspondante du bâti de guidage de fenêtre (2),
**caractérisé en ce que** :
- le cadre coulissant (6) comprend un dispositif de sécurité de transport intégré (24), dans lequel, pour ce faire, une cavité est réalisée par un laser sous forme d'un logement de vis directement lors de l'usinage de la tôle pour fabriquer le cadre coulissant,
- le dispositif de sécurité de transport intégré (24) peut être connecté au bâti de guidage de fenêtre (2) dans la position de transport du cadre coulissant (6), et
- le dispositif de sécurité de transport intégré (24) peut être vissé au bâti de guidage de fenêtre (2) dans la position de transport.

2. Dispositif de fenêtre selon la revendication 1, dans lequel le cadre coulissant (6) est découpé avec un laser.

3. Dispositif de fenêtre selon la revendication 1 ou 2, dans lequel le cadre coulissant (6) est fabriqué en une tôle pliée périphérique.

4. Dispositif de fenêtre selon l'une des revendications 1 à 3, dans lequel le cadre coulissant (6) borde une surface plus grande que la surface correspondante de l'ouverture de fenêtre (11) du bâti de guidage de fenêtre (2).

5. Dispositif de fenêtre selon l'une des revendications 1 à 4, dans lequel un joint d'étanchéité périphérique (40) est positionné entre la vitre de fenêtre (12) et un bord (38) du bâti de guidage de fenêtre (2) recouvert par la vitre de fenêtre (12).

6. Dispositif de fenêtre selon l'une des revendications 1 à 5, dans lequel tous les points de liaison pour des éléments de guidage (8, 10) et/ou de verrouillage (22, 24), ainsi que pour un contrepoids (26) et/ou un mécanisme à ressort sont réalisés de façon solidaire avec le cadre coulissant (6).
